# EUROPEAN PATENT SPECIFICATION

(11) **EP 3 291 408 B1**
(45) Date of publication and mention of the grant of the patent: **06.03.2019**
(21) Application number: 17181040.1
(22) Date of filing: 12.07.2017
(51) Int. Cl.: H02J 7/02, H02J 50/12

(54) **WIRELESS CHARGING CIRCUIT**
DRAHTLOSE LADESCHALTUNG
SYSTÈME DE CHARGE SANS FIL

(30) Priority: 29.08.2016 CN 201620965343 U
(43) Date of publication of application: 07.03.2018
(73) Proprietor: King-Meter Technology Co.,Ltd, Beichen District Tianjin 300134 (CN)
(72) Inventor: TONG, Deyuan, Tianjin, 300134 (CN)
(74) Representative: Sun, Yiming

(56) References cited:
- JP-A- H11 252 913
- US-A1- 2012 068 552

## Description

### Technosphere

The invention related field of electric vehicle, more specifically, it refer to a wireless charging circuit of electric vehicle or electric motor car.

### Background

The charging way of most electric bicycle or electric vehicle at present is contact charging .It is a problem that the battery would be bad contact if put in or out frequently. It is a complicated situation with different type of charger and connector which product with different manufacture.

Prior art wireless charging circuits are disclosed in JP H11 252913 A or US 2012/068552 A1.

### Content of Invention

The problem will be solved by the invention which is to conquer the shortage of present technical and provide a wireless charging circuit which used in the electric bike or electric motor car.

The invention wireless charging circuit is made of wireless charging and emission circuit and wireless charging and receiving circuit as set out in the claims.

Compared with the current charging circuit invention has reduced wear rate of charging equipment and develop the range of usage and make easier to operate and charge battery.

### Attached drawings introduction

Fig.1 is the part circuit diagram of the emission circuit of Invention.
Fig. 2 is the part circuit diagram of receiving circuit of Invention.

### Specific implementation

The following combination of figure and specific implementation further explain detailedly for the invention. It should be understood that the specific implementation described herein explain the inventiononly. It is not used to define the invention.

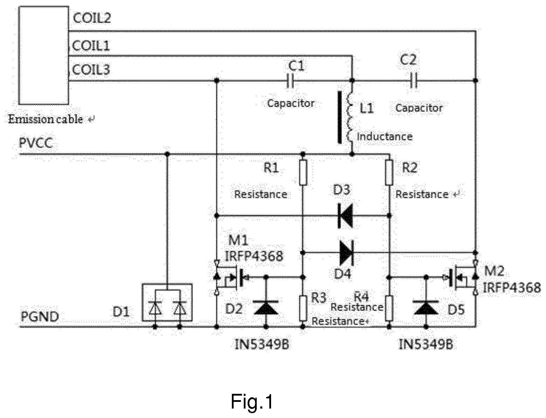

As shown in the Fig.1,the part of wireless charging and emission circuit of the invention: Anode PVCC of input DC link cathode of diode D1 and one end of resistance R1 and R2 and end of induction, anode of diode D1 link cathode PGND of input DC, another end of resistance R1 link anode of diode D4 and end of resistance R3 and cathode of diode D2 and grid of metal-oxide semiconductor field effect transistor M1,M1 model number is IRFP4368,another one end of resistance R3 link cathode PGND of input DC, anode of diode D2 link cathode PGND of input DC, drain of metal-oxide semiconductor field effect transistor M1 link cathode of diode D3 and one end of capacitor and terminal COIL3,source electrode of metal-oxide semiconductor field effect transistor M1 link cathode PGND of input DC ,another end of induction L1 link another end of capacitor C1 and another end of C2 AND terminalCOIL1, another one end of resistance R2 link anode of diode D3 and the end of resistance R4 and the end of diode D5 and grid of metal-oxide semiconductor field effect transistor M2,M2 model number is IRFP4368,another end of resistance R4 link cathode PGND of input DC, anode of diode D5 link cathode PGND of input DC, the drain of metal-oxide semiconductor field effect transistor M2 link cathode of diode D4 and one end of capacitor C2 and the port of terminal COIL2, source electrode of M2 link cathode PGND of input DC ,the port of terminal COIL1 link common terminal of emission coil, terminal COIL2 and COIL3 link one end and another end of emission coil separately.

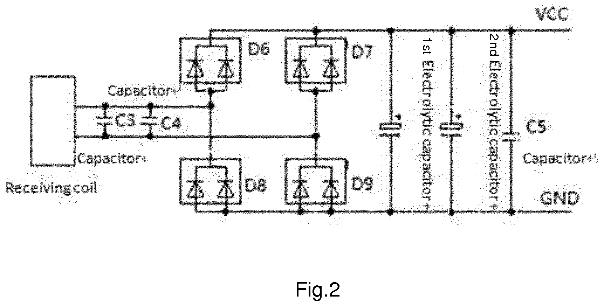

As the shown of Fig. 2, the part of wireless charging and receiving circuit of the invention is: one end of receiving coil link one end of resistance C3 and C4 and anode of diode D6 and cathode of diode D8,another end of receiving coil link another end of resistance C3 and C4 and anode of diode D7 and cathode of diode D9,cathode of diode D6 link cathode of diode D7 and anodes of first and second electrolytic capacitors and one end of capacitor C5 and anode port VCC of output DC, anode of diode D8 link anode diode of D9 and cathodes of first and second electrolytic capacitors and another end of capacitor C5 and cathode port of output DC.

Charging can be realized when anode of charging equipment can be connected to the anode port VCC of output DC, and cathode of charging equipment can be connected to the cathode GND of output DC.

## Claims

1. A wireless charging circuit comprising a wireless charging and emission circuit and a wireless charging and receiving circuit; wherein
the wireless charging and emission circuit comprises: an anode (PVCC) of an input DC link connected to a cathode of a first diode (D1), one end of a first resistance (R1), one end of a second resistance (R2) and one end of a first inductance (L1), an anode of the first diode (D1) connected to a cathode (PGND) of the DC link, another end of the first resistance (R1) connected to an anode of a fourth diode (D4), an end of a third resistance (R3), a cathode of a second diode (D2) and a grid electrode of a first metal-oxide semiconductor field effect transistor (M1), another end of the third resistance (R3) connected to the cathode (PGND) of the input DC link, an anode of the second diode (D2) connected to the cathode (PGND) of the input DC link, a drain electrode of the first metal-oxide semiconductor field effect transistor (M1) connected to a cathode of a third diode (D3), an end of a first capacitor (C1) and a third port (COIL3) of an emission coil, a source electrode of the first metal-oxide semiconductor field effect transistor (M1) connected to the cathode (PGND) of the input DC link, another the end of the first inductance (L1) connected to another end of the first capacitor (C1), an end of a second capacitor (C2), and a first port (COIL1) of the emission coil, another end of the second resistance (R2) connected to an anode of the third diode (D3), an end of a fourth resistance (R4), a cathode of a fifth diode (D5) and a grid of a second metal-oxide semiconductor field effect transistor (M2), another end of the fourth resistance (R4) connected to the cathode (PGND) of the input DC link, an anode of the fifth diode (D5) connected to the cathode (PGND) of the input DC link, a drain electrode of the second metal-oxide semiconductor field effect transistor (M2) connected to a cathode of the fourth diode (D4), another end of the second capacitor (C2) and a second port (COIL2) of the emission coil, a source electrode of the second metal oxide semiconductor field effect transistor (M2) connected to the cathode (PGND) of the input DC link, the first port (COIL1) connected to a common end of the emission coil, the second port (COIL2) and the third port (COIL3) connected to an end and another end of the emission coil;
the wireless charging and receiving circuit comprises: an end of a receiving coil connected to an end of an third capacitor (C3), an end of a fourth capacitor (C4), an anode of a sixth diode (D6) and a cathode of an eighth diode (D8), another end of the receiving coil connected to another end of the third capacitor (C3), another end of the fourth capacitor (C4), an anode of a seventh diode (D7) and a cathode of a ninth diode (D9), a cathode of the sixth diode (D6) connected to a cathode of the seventh diode (D7), an anode of a first electrolytic capacitor, an anode of a second electrolytic capacitor, and an end of a fifth capacitor (C5) and an anode (VCC) of an output DC link, an anode of the eighth diode (D8) connected to an anode of the ninth diode (D9), a cathode of the first electrolytic capacitor, a cathode of the second electrolytic capacitor, another end of the fifth capacitor (C5) and a cathode (GND) of the output DC link.

2. The wireless charging circuit according to claim 1, wherein the metal-oxide semiconductor field effect transistors (M1, M2) are models number IRFP4368.

## Patentansprüche

1. Ein drahtloser Ladeschaltkreis umfassend einen drahtlosen Lade- und Emissionsschaltkreis und einen drahtlosen Lade- und Empfangsschaltkreis; wobei
der drahtlose Lade- und Emissionsschaltkreis umfasst: eine Anode (PVCC) eines Eingangs-Gleichstromanschlusses verbunden mit einer Kathode einer ersten Diode (D1), einem Ende eines ersten Widerstands (R1), einem Ende eines zweiten Widerstands (R2) und einem Ende einer ersten Induktivität (L1), eine Anode der ersten Diode (D1) verbunden mit einer Kathode (PGND) des Gleichstromanschlusses, ein anderes Ende des ersten Widerstands (R1) verbunden mit einer Anode einer vierten Diode (D4), einem Ende eines dritten Widerstands (R3), einer Kathode einer zweiten Diode (D2) und einer Gate-Elektrode eines ersten Metalloxid-Halbleiter-Feldeffekttransistors (M1), ein anderes Ende des dritten Widerstands (R3) verbunden mit der Kathode (PGND) des Eingangs-Gleichstromanschlusses, eine Anode der zweiten Diode (D2) verbunden mit der Kathode (PGND) des Eingangs-Gleichstromanschlusses, eine Drain-Elektrode des ersten Metalloxid-Halbleiter-Feldeffekttransistors (M1) verbunden mit einer Kathode einer dritten Diode (D3), einem Ende eines ersten Kondensators (C1) und einem dritten Anschluss (COIL3) einer Emissionsspule, eine Source-Elektrode des ersten Metalloxid-Halbleiter-Feldeffekttransistors (M1) verbunden mit der Kathode (PGND) des Eingangs-Gleichstromanschlusses, ein anderes Ende der ersten Induktivität (L1) verbunden mit einem anderen Ende des ersten Kondensators (C1), einem Ende eines zweiten Kondensators (C2) und einem ersten Anschluss (COIL1) der Emissionsspule, ein anderes Ende des zweiten Widerstands (R2) verbunden mit einer Anode der dritten Diode (D3), einem Ende eines vierten Widerstands (R4), einer Kathode einer fünften Diode (D5) und einer Gate-Elektrode eines zweiten Metalloxid-Halbleiter-Feldeffekttransistors (M2), ein anderes Ende des vierten Widerstands (R4) verbunden mit der Kathode (PGND) des Eingangs-Gleichstromanschlusses, eine Anode der fünften Diode (D5) verbunden mit der Kathode (PGND) des Eingangs-Gleichstromanschlusses, eine Drain-Elektrode des zweiten Metalloxid-Halbleiter-Feldeffekttransistors (M2) verbunden mit einer Kathode der vierten Diode (D4), einem anderen Ende des zweiten Kondensators (C2) und einem zweiten Anschluss (COIL2) der Emissionsspule, eine Source-Elektrode des zweiten Metalloxid-Halbleiter-Feldeffekttransistors (M2) verbunden mit der Kathode (PGND) des Eingangs-Gleichstromanschlusses, der erste Anschluss (COIL1) verbunden mit einem gemeinsamen Ende der Emissionsspule, der zweite Anschluss (COIL2) und der dritte Anschluss (COIL3) verbunden mit einem Ende und einem anderen Ende der Emissionsspule;
der drahtlose Lade- und Empfangsschaltkreis umfasst: ein Ende einer Empfangsspule verbunden mit einem Ende eines dritten Kondensators (C3), einem Ende eines vierten Kondensators (C4), einer Anode einer sechsten Diode (D6) und einer Kathode einer achten Diode (D8), ein anderes Ende der Empfangsspule verbunden mit einem anderen Ende des dritten Kondensators (C3), einem anderen Ende des vierten Kondensators (C4), einer Anode einer siebten Diode (D7) und einer Kathode einer neunten Diode (D9), eine Kathode der sechsten Diode (D6) verbunden mit einer Kathode der siebten Diode (D7), einer Anode eines ersten Elektrolytkondensators, einer Anode eines zweiten Elektrolytkondensators und einem Ende eines fünften Kondensators (C5) und einer Anode (VCC) eines Ausgangs-Gleichstromanschlusses, eine Anode der achten Diode (D8) verbunden mit einer Anode der neunten Diode (D9), einer Kathode des ersten Elektrolytkondensators, einer Kathode des zweiten Elektrolytkondensators, einem anderen Ende des fünften Kondensators (C5) und einer Kathode (GND) des Ausgangs-Gleichstromanschlusses.

2. Der drahtlose Ladeschaltkreis nach Anspruch 1, wobei die Metalloxid-Halbleiter-Feldeffekttransistoren (M1, M2) Modelle der Bezeichnung IRFP4368 sind.

## Revendications

1. Circuit de charge sans fil comprenant un circuit de charge et d'émission sans fil et un circuit de charge et de réception sans fil ; dans lequel
le circuit de charge et d'émission sans fil comprend : une anode (PVCC) d'un bus CC d'entrée connectée à une cathode d'une première diode (D1), une extrémité d'une première résistance (R1), une extrémité d'une deuxième résistance (R2) et une extrémité d'une première inductance (L1), une anode de la première diode (D1) connectée à une cathode (PGND) du bus CC, une autre extrémité de la première résistance (R1) connectée à une anode d'une quatrième diode (D4), une extrémité d'une troisième résistance (R3), une cathode d'une deuxième diode (D2) et une électrode de grille d'un premier transistor à effet de champ à grille isolée (M1), une autre extrémité de la troisième résistance (R3) connectée à la cathode (PGND) du bus CC d'entrée, une anode de la deuxième diode (D2) connectée à la cathode (PGND) du bus CC d'entrée, une électrode de drain du premier transistor à effet de champ à grille isolée (M1) connectée à une cathode d'une troisième diode (D3), une extrémité d'un premier condensateur (C1) et un troisième port (COIL3) d'une bobine d'émission, une électrode de source du premier transistor à effet de champ à grille isolée (M1) connectée à la cathode (PGND) du bus CC d'entrée, une autre extrémité de la première inductance (L1) connectée à une autre extrémité du premier condensateur (C1), une extrémité d'un deuxième condensateur (C2), et un premier port (COIL1) de la bobine d'émission, une autre extrémité de la deuxième résistance (R2) connectée à une anode de la troisième diode (D3), une extrémité d'une quatrième résistance (R4), une cathode d'une cinquième diode (D5) et une grille d'un deuxième transistor à effet de champ à grille isolée (M2), une autre extrémité de la quatrième résistance (R4) connectée à la cathode (PGND) du bus CC d'entrée, une anode de la cinquième diode (D5) connectée à la cathode (PGND) du bus CC d'entrée, une électrode de drain du deuxième transistor à effet de champ à grille isolée (M2) connectée à une cathode de la quatrième diode (D4), une autre extrémité du deuxième condensateur (C2) et un deuxième port (COIL2) de la bobine d'émission, une électrode de source du deuxième transistor à effet de champ à grille isolée (M2) connectée à la cathode (PGND) du bus CC d'entrée, le premier port (COIL1) connecté à une extrémité commune de la bobine d'émission, le deuxième port (COIL2) et le troisième port (COIL3) connectés à une extrémité et à une autre extrémité de la bobine d'émission ;
le circuit de charge et de réception sans fil comprend : une extrémité d'une bobine de réception connectée à une extrémité d'un troisième condensateur (C3), une extrémité d'un quatrième condensateur (C4), une anode d'une sixième diode (D6) et une cathode d'une huitième diode (D8), une autre extrémité de la bobine de réception connectée à une autre extrémité du troisième condensateur (C3), une autre extrémité du quatrième condensateur (C4), une anode d'une septième diode (D7) et une cathode d'une neuvième diode (D9), une cathode de la sixième diode (D6) connectée à une cathode de la septième diode (D7), une anode d'un premier condensateur électrolytique, une anode d'un deuxième condensateur électrolytique, et une extrémité d'un cinquième condensateur (C5) et une anode (VCC) d'un bus CC de sortie, une anode de la huitième diode (D8) connectée à une anode de la neuvième diode (D9), une cathode du premier condensateur électrolytique, une cathode du deuxième condensateur électrolytique, une autre extrémité du cinquième condensateur (C5), et une cathode (GND) du bus CC de sortie.

2. Circuit de charge sans fil selon la revendication 1, dans lequel les transistors à effet de champ à grille isolée (M1, M2) sont des modèles à numéro IRFP4368.
